# EUROPEAN PATENT SPECIFICATION

(11) **EP 2 532 871 B1**
(45) Date of publication and mention of the grant of the patent: **16.03.2016**
(21) Application number: 11736821.7
(22) Date of filing: 28.01.2011
(51) Int. Cl.: F02F 3/00, F02F 1/18, F16J 1/02, F16J 9/00, F02B 77/04

(54) **RECIPROCATING ENGINE**
HUBKOLBENMOTOR
MOTEUR ALTERNATIF

(30) Priority: 04.08.2010 JP 2010175804; 01.02.2010 JP 2010020781
(43) Date of publication of application: 12.12.2012
(73) Proprietor: Bando Kiko Co., Ltd, Tokushima-shi Tokushima 770-0871 (JP)
(72) Inventor: BANDO, Shigeru, Tokushima-shi Tokushima 770-0862 (JP)
(74) Representative: Nicholls, Michael John
(86) International application number: PCT/JP2011/000500
(87) International publication number: WO 2011/093106

(56) References cited:
- WO-A1-92/02722
- JP-A- 4 362 258
- JP-A- 2009 114 927

## Description

The present invention relates to improvements of a reciprocating engine in which, in an explosion and expansion stroke, a piston is supported (floated by gas pressure) by a high-pressure combustion gas in opposition to the lateral pressure acting on the piston, so as to reduce the frictional resistance between the piston and a cylinder.

Techniques described in WO-A1-92/02722 on which the precharacterizing portion of claim 1 is based, and in WO-A-2004/079177, EP-A-1878901 and WO-A-2008/047453, are such that a gas chamber is formed around a second land portion of the piston, and during an initial period of the explosion and expansion stroke a high-pressure combustion gas from above the piston is introduced into and held in this gas chamber through gas passage holes provided in a cylinder inner surface, whereby the piston is supported from a thrust side by this high-pressure combustion gas introduced and held, to thereby reduce frictional resistance between the piston and the cylinder inner surface.

However, during the operation of the engine, the introduction, holding, and discharge of the high-pressure combustion gas from above the piston are repeated in the aforementioned gas chamber. Then, adhesion and deposition of carbon on the surface of the gas chamber gradually occurs.

Accordingly, an object of the present invention is to provide a reciprocating engine in which adhesion and deposition of carbon does not occur in the gas chamber even when the engine is operated over long periods of time and the introduction, holding, and discharge of the high-pressure combustion gas are repeated in the aforementioned gas chamber.

In accordance with the present invention, there is provided a reciprocating engine in which, in an initial period of an expansion stroke, a high-pressure combustion gas from above a piston is introduced via gas passage holes provided in an upper portion of a cylinder inner surface on a thrust side into a gas chamber formed by being encompassed by the cylinder inner surface and a top ring, a second ring, and a second land of the piston, so as to support the piston from the thrust side by the introduced high-pressure combustion gas, characterized in that said reciprocating engine comprises: a half ring which is inserted in the gas chamber in a state of being placed on the second land from the thrust side and so as to be movable up and down with clearances above and below, whereby as the piston reciprocates, the half ring moves up and down an amount corresponding to a size of the clearances, thereby continually cleaning an inside of the gas chamber.

In the reciprocating engine in accordance with the present invention, even if the gas chamber is subjected to the repeated introduction, holding, and discharge of the high-pressure combustion gas, since the half ring always continues its up-down movement inside the gas chamber to effect cleaning action, the adhesion and deposition of carbon does not occur inside the gas chamber.

In the present invention, the half ring may be formed of a heat-resistant metal plate made of such as stainless steel or spring steel. In a preferred example of the present invention, however, the half ring is formed of a metal plate, such as one formed of stainless steel, which is higher in heat insulating properties than a material for forming the piston which is formed of an aluminum alloy or the like.

In such an example, since the half ring has heat resistance, the high-pressure combustion gas introduced into the gas chamber can be kept at a high temperature, with the result that the occurrence of adhesion and deposition of carbon in the gas chamber can be prevented more satisfactorily.

It should be noted that, in the reciprocating engine in accordance with the present invention, the aforementioned terms "above and below" and "up-down movement" means movement along the reciprocating direction of the piston.

### ADVANTAGES OF THE INVENTION

Even if the gas chamber is subjected to the repeated introduction, holding, and discharge of the high-pressure combustion gas, since the half ring always continues its up-down movement inside the gas chamber to effect cleaning action, the adhesion and deposition of carbon does not occur inside the gas chamber, and the introduced high-pressure combustion gas can be kept at a high temperature.

### BRIEF DESCRIPTION OF THE DRAWINGS

Fig. 1 is an explanatory longitudinal cross-sectional view of a reciprocating engine in accordance with an embodiment of the invention;
Fig. 2 is an identical explanatory longitudinal cross-sectional view in which a half ring in Fig. 1 is shown in a cutaway manner; and
Fig. 3 is a perspective view of the half ring shown in Figs. 1 and 2.

### MODE FOR CARRYING OUT THE INVENTION

Hereafter, a description will be given of the mode for carrying out the present invention with reference to an embodiment illustrated in the drawings.

### EMBODIMENT

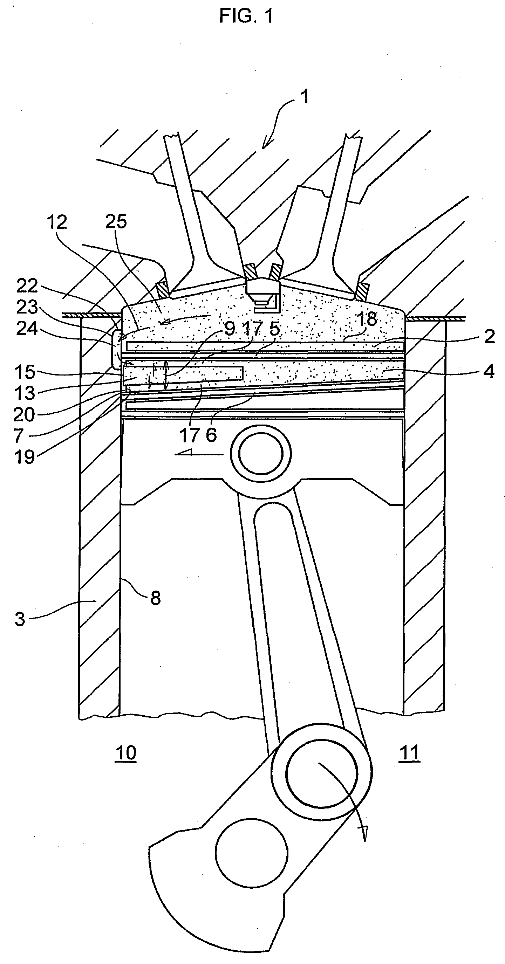

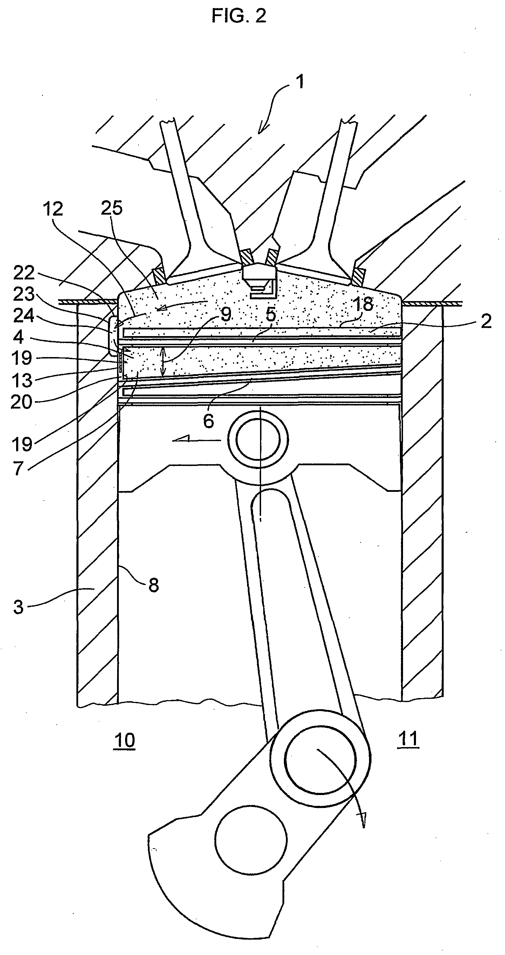

Figs. 1 and 2 show a state during an initial period of a lowering stroke of a piston 2 in an explosion and expansion stroke.

Figs. 1 and 2 show a reciprocating engine 1 in accordance with this embodiment in an initial period of the explosion and expansion stroke.

Reference numeral 2 denotes the piston, and reference numeral 3 denotes a cylinder. Further, reference numeral 4 denotes a gas chamber.

The gas chamber 4 is formed by being encompassed by a cylinder inner surface 8 and a top ring 5, a second ring 6, and a second land 7 of the piston 2. As for the gas chamber 4, its vertical width 9 is wider on a thrust side 10 and narrower on an anti-thrust side 11.

This is to ensure that, by making a gas-pressure receiving area wider on the thrust side 10 and narrower on the anti-thrust side 11, the piston 2 is supported from the thrust side 10 (in opposition to the lateral pressure of the piston) by a high-pressure combustion gas 12 introduced and held, to thereby make the pushback from the anti-thrust side 11 small.

In the gas chamber 4, a circular arc-shaped half ring 13 is inserted in a state of being placed on the second land 7 from the thrust side 10.

In addition, the half ring 13 is inserted in such a manner as to be movable up and down with clearances 17 above and below (in the reciprocating direction of the piston 2) inside the gas chamber 4.

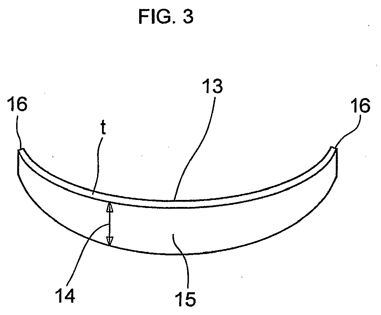

As shown in Fig. 3, the half ring 13 is formed in a circular arc shape conforming to the circumferential surface of the second land 7.

In addition, as for the half ring 13, its front side and lateral sides are formed such that its vertical width 14 is made wide in a front central portion 15 and narrower at both side ends 16 in conformity with the shape of the gas chamber 4.

Further, the vertical width 14 of the half ring 13, as a whole, is made shorter than the vertical width 9 of the gas chamber 4. This is to allow the clearances 17 to be created above and below in a state in which the half ring 13 is inserted in the gas chamber 4. The half ring 13 moves up and down inside the gas chamber 4 an amount corresponding to the distance of these clearances 17.

As shown in Figs. 1 and 2, the half ring 13 is inserted in the gas chamber 4 with its front central portion 15 matched with the thrust side 10.

In particular, during the operation of the engine, the half ring 13 is moved up and down by the reciprocating movement of the piston 2 so as to vertically sweep the surface of the second land 7 for forming the gas chamber 4.

In addition, the thickness t of the half ring 13 is such a thickness that, during the operation of the engine, the half ring 13 can freely move up and down (along the reciprocating direction of the piston 2) within a clearance 20 between the cylinder inner surface 8 and a surface 19 of the second land 7.

In addition, the half ring 13 is formed of a metal plate, such as one formed of stainless steel, which is higher in heat insulating properties than a material for forming the piston 2 which is formed of an aluminum alloy or the like.

It should be noted that, with respect to the piston 2 of the reciprocating engine 1 in accordance with this embodiment, the top ring 5 for forming the gas chamber 4 is provided in parallel to a piston top surface 18, while the second ring 6 is provided in such a manner as to be inclined cowardly toward the thrust side 10. Namely, the second ring 6 is provided in such a manner as to be located away from the top ring 5 on the thrust side 10 and to be located closer to the top ring 5 as it approaches the anti-thrust side.

Accordingly, the interval (distance) between the top ring 5 and the second ring 6, i.e., the vertical width 9 of the gas chamber 4, is wider on the thrust side 10 and becomes gradually narrower as it approaches the anti-thrust side 11.

In addition, a plurality of gas passage holes 23 are provided in an upper portion 22 of the cylinder inner surface 8 on the thrust side 10. When the top ring 5 of the piston passes over the gas passage holes 23 in a lowering stroke of the piston 2, a combustion chamber 25 above the piston 2 and the gas chamber 4 of the piston 2 communicate with each other through recesses 24 of these gas passage holes 23, thereby allowing the high-pressure combustion gas 12 in the combustion chamber 25 to be introduced into and held in the gas chamber 4.

Namely, in the initial period of the explosion and expansion stroke, when the top ring 5 of the piston 2 passes the gas passage holes 23 in an upper portion of the cylinder inner surface 8, the combustion chamber 25 above the piston 2 and the gas chamber 4 of the piston 2 communicate with each other, so that the high-pressure combustion gas 12 is introduced into and held in the gas chamber 4.

At this juncture, the piston 2, upon receiving the action of the lateral pressure, tends to be pressed against the cylinder inner surface 8, but the piston is lowered during the lowering stroke in a state of being supported from the thrust side 10 (in opposition to the lateral pressure acting on the piston 2) by the high-pressure combustion gas introduced into and held in the gas chamber 4.

According to the reciprocating engine 1 in accordance with this embodiment, during the operation of the engine, i.e., while the piston 2 is reciprocating, the introduction (influx), holding, and discharge of the combustion gas 12 are repeatedly carried out in the gas chamber 4 of the piston 2, and the half ring 13 continues its up-down movement in this gas chamber 4, thereby continually effecting cleaning action inside the gas chamber 4. For this reason, although the gas chamber 4 is repeatedly subjected to the introduction and holding of the high-pressure combustion gas 12, the occurrence of adhesion and deposition of carbon inside the gas chamber 4, particularly on such as the surface 19 of the second land 7, is prevented by virtue of the cleaning action of the half ring 13.

### DESCRIPTION OF REFERENCE NUMERALS

- 1:: reciprocating engine
- 2:: piston
- 3:: cylinder
- 4:: gas chamber
- 5:: top ring
- 6:: second ring
- 7:: second land
- 8:: cylinder inner surface
- 9:: vertical width of gas chamber
- 10:: thrust side
- 11:: anti-thrust side
- 12:: high-pressure combustion gas
- 13:: half ring
- 14:: vertical width of half ring
- 15:: front central portion
- 16:: both side ends
- 17:: vertical clearance
- 18:: piston top surface
- 19:: surface of second land
- 20:: clearance
- 22:: upper portion
- 23:: gas passage hole
- 24:: recess
- 25:: combustion chamber

## Claims

1. A reciprocating engine (1) in which, in an initial period of an expansion stroke, a high-pressure combustion gas (12) from above a piston (2) is introduced via gas passage holes (23) provided in an upper portion (22) of a cylinder inner surface (8) on a thrust side (10) into a gas chamber (4) formed by being encompassed by the cylinder inner surface (8) and a top ring (5), a second ring (6), and a second land (7) of the piston (2), so as to support the piston (2) from the thrust side (10) by the introduced high-pressure combustion gas, **characterized in that**,
said reciprocating engine (1) comprises: a half ring (13) which is inserted in the gas chamber (4) in a state of being placed on the second land (7) from the thrust side (10) and so as to be movable up and down with clearances (20) above and below, whereby as the piston (2) reciprocates, the half ring (13) moves up and down an amount corresponding to a size of the clearances (20), thereby continually cleaning an inside of the gas chamber (4).

2. The reciprocating engine (1) according to claim 1, wherein the half ring (13) is formed of a metal plate which is higher in heat insulating properties than a material for forming the piston (2).

## Patentansprüche

1. Hubkolbenmotor (1), wobei ein Hochdruckverbrennungsgas (12) von einer Stelle oberhalb eines Kolbens (2) in einer Anfangsphase eines Expansionshubs über in einem oberen Abschnitt (22) einer Zylinderinnenfläche (8) auf einer Schubseite (10) bereitgestellte Gasdurchgangslöcher (23) in eine Gaskammer (4) eingeleitet wird, welche dadurch ausgebildet ist, dass sie von der Zylinderinnenfläche (8) und einem Auflagering (5), einem zweiten Ring (6) und einem zweiten Steg (7) des Kolbens (2) umgeben ist, um so den Kolben (2) von der Schubseite (10) her durch das eingeleitete Hochdruckverbrennungsgas zu stützen, **dadurch gekennzeichnet, dass**
der Hubkolbenmotor (1) Folgendes umfasst: einen Halbring (13), der in einem auf den zweiten Steg (7) aufgesetzten Zustand von der Schubseite (10) her in die Gaskammer (4) eingesetzt ist, um so mit Aussparungen (20) ober- und unterhalb auf- und abbewegbar zu sein, wodurch der Halbring (13), während der Kolben (2) sich hin- und herbewegt, sich um eine einer Größe der Aussparungen (20) entsprechende Höhe auf- und abbewegt, wodurch er ein Inneres der Gaskammer (4) fortwährend reinigt.

2. Hubkolbenmotor (1) nach Anspruch 1, wobei der Halbring (13) aus einer Metallplatte gebildet ist, die höhere wärmedämmende Eigenschaften hat als ein Material zum Ausbilden des Kolbens (2).

## Revendications

1. Moteur (1) à piston dans lequel, au début d'une course de détente, des gaz de combustion (12) sous haute pression arrivant d'au-dessus d'un piston (2) sont introduits via des trous de passage (23) de gaz ménagés dans une partie supérieure (22) de la surface intérieure (8) d'un cylindre, à partir d'un côté poussée (10), dans une chambre de combustion (4) formée en étant délimitée par la surface intérieure (8) de cylindre et un segment supérieur (5), un second segment (6) et un second cordon (7) du piston (2), de manière à supporter le piston (2) depuis le côté poussée (10) par les gaz de combustion sous haute pression introduits,
ledit moteur (1) à piston étant caractérisé en ce comporte :
segment (13) qui est inséré dans la chambre de combustion (4) dans un état où il est placé sur le second cordon (7) à partir du côté poussée (10) et de manière à pouvoir monteur et descendre avec des espaces (20) au-dessous et au-dessous, grâce à quoi, lorsque le piston (2) va et vient, le demi-segment (13) monte et descend dans une mesure correspondant à une dimension des espace (20), ce qui nettoie donc en continu un intérieur de la chambre de combustion (4).

2. Moteur (1) à piston selon la revendication 1, dans lequel le demi-segment (13) est constitué d'une plaque métallique à propriétés d'isolation thermique supérieures à celle d'une matière dont est formé le piston (2).
